# EUROPEAN PATENT SPECIFICATION

(11) **EP 2 116 669 B1**
(45) Date of publication and mention of the grant of the patent: **20.11.2013**
(21) Application number: 09251277.1
(22) Date of filing: 07.05.2009
(51) Int. Cl.: E04G 5/00

(54) **Aerial Lift with material support assembly**
Arbeitsbühne mit Materialstützanordnung
Plateforme de travail comprenant un ensemble de support de matériel

(30) Priority: 09.05.2008 GB 0808436
(43) Date of publication of application: 11.11.2009
(73) Proprietor: Bluesky Solutions Limited, Leicestershire LE17 4PN (GB)
(72) Inventor: Cummings, Paul, Bicester Oxfordshire OX6 9LA (GB)
(74) Representative: Franks & Co (South) Limited

(56) References cited:
- AT-B- 363 222
- DE-U1- 20 218 395
- GB-A- 2 439 301
- US-A1- 2004 218 997

## Description

### Field

This invention relates to material support assembly which in use may form part of a storage rack in particular for the storage of lengths of material, in particular pipes or tubes, during construction of buildings.

### Background of the Invention

Building construction sites for large buildings frequently employ construction equipment for lifting large and heavy components into position during the construction of a building. For example, lengths of standard 8 inch (200mm) diameter steel pipe are typically 6 meters in length and may weigh in the order of 150 kgs. During construction of commercial building the overhead pipe work is typically lifted and fixed into position using aerial lifts.

A typical aerial lift is a mobile scissor lift available from JLG Ind. and which has a work platform which may be lifted into the air by a hydraulically operable scissor mechanism. For safety the work platform is surrounded by a safety barrier or fence.

As is described in the applicants co-pending GB patent Application GB-A-2439 301 these lifts may be provided with a pipe storage rack which is secured to the lift platform by engagement with a portion of the kick plate which forms part of the safety barrier. US 2004/0218997 A1 discloses an aerial lift with the features of the preamble of claim 1.

The present invention provides an improved material storage assembly for use on an aerial lift and which can be independently fitted to the lift platform without the need to drill or tap holes in the platform.

### Statements of Invention

According to the present invention there is provided an aerial lift having a work platform surrounded by a safety barrier including a kick plate adjacent the platform, with a material support rack located within the safety barrier and comprising two material support assemblies arranged side by side each support assembly (21), having at least one leg (22 OR 23) mounted on a foot (24) which in use rests on the platform (12), the leg and foot having a first coupling means (31) for securing the assembly to a first portion of the kick plate (14) to one side of the platform, wherein each foot (24) is also connected to a further coupling means (32) for engaging a respective second portion of the kick plate (14) on the opposite side of the platform.

The support is thus held in place by engaging with the kick plate on opposite sides of the platform and is held in stable condition resting on the platform.

Preferably the further coupling means is provided on an arm which extends away from the foot and in use also rests against the platform, the further coupling means being located at the distal end of said arm.

The coupling means may be adjustably connected to the foot, and/or the further coupling means may also be adjustably connected to the foot. Preferably the material support assembly comprises a pair of spaced apart legs each secured to a foot plate, with a third leg secured to the arm.

Each leg of said pair of legs has a coupling means at its lower end portion provided in the form of a catch which is engagable with the kick plate to hold the foot plate adjacent the kick plate, and the arm has a like catch thereon forming the further coupling means. The coupling means on each leg of said pair may be formed integrally with each other as a single catch. The catch means may comprise open hooks.

The upper end portions of each leg are connected to a triangular material support, preferably with its apex attached to the third leg.

The kick plate on an aerial lift typically has an upper edge with either an inwardly or an outwardly turned lip which may be further provided with a downwardly turned lip flange. The catches on the legs and arm may engage with the lip and flange of the kick plate either by insertion into the underside of the inwardly extending lip or by hooking over the outwardly extending lip. In an alternative arrangement the coupling means may engage over the lip.

Alternatively, the kick-plate may comprise a substantially substantially flat plate, and the coupling means engages both sides of the flat plate.

According to another aspect of the present invention there is provided a method of securing a material storage rack within an aerial lift having a work platform surrounded by a safety barrier with a kick plate adjacent the platform, the material support rack comprising two material support assemblies, wherein each assembly has at least one leg having a foot plate and arm which in use rest on the platform, the leg and arm having a coupling means thereon for securing the rack to said kick plate, wherein in said method the leg and arm are coupled to the kick plate with the foot and arm then rested on the platform in the following steps; the leg and foot, separate from the arm, are caused to engage the respective coupling means with a first portion of the kick plate and the foot then rested on the platform, the coupling means on said arm is caused to engage with a second portion of the kick plate on the opposite side of the platform, the portion of said arm including the coupling then being attached to foot.

The foot may comprise a plate and the leg and footplate may be tilted to engage the coupling means with the kick plate.

### Description of the Drawings

The invention will be described by way of example and with reference to the accompanying drawings in which:-
- Fig. 1: is a side elevation of an aerial lift and platform
- Fig. 2: is an isometric view of the platform having a material storage assembly according to the present invention,
- Fig. 3: is an isometric view of the storage assembly of Fig. 2,
- Fig. 4: is section through a kick plate 14 showing the engagement of the over coupling device with an outwardly extending kick plate lip,
- Fig. 5: is a side elevation of one side of a second storage assembly showing an alternative coupling device engaging a kick plate with an inwardly extending lip,
- Fig. 6: is a side elevation of the assembly of Fig.5 during fitting,
- Fig.7: is an isometric view of material storage assembly similar to Fig.2 having yet another coupling device, and
- Fig.8: is an isometric view of material storage assembly similar to Fig.2 having yet a further coupling device.

### Detailed Description of the Invention

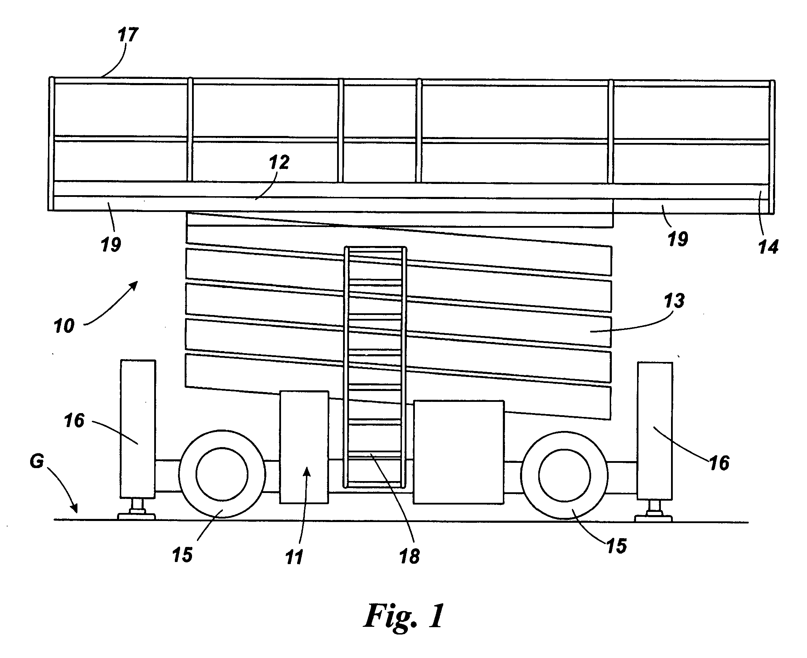

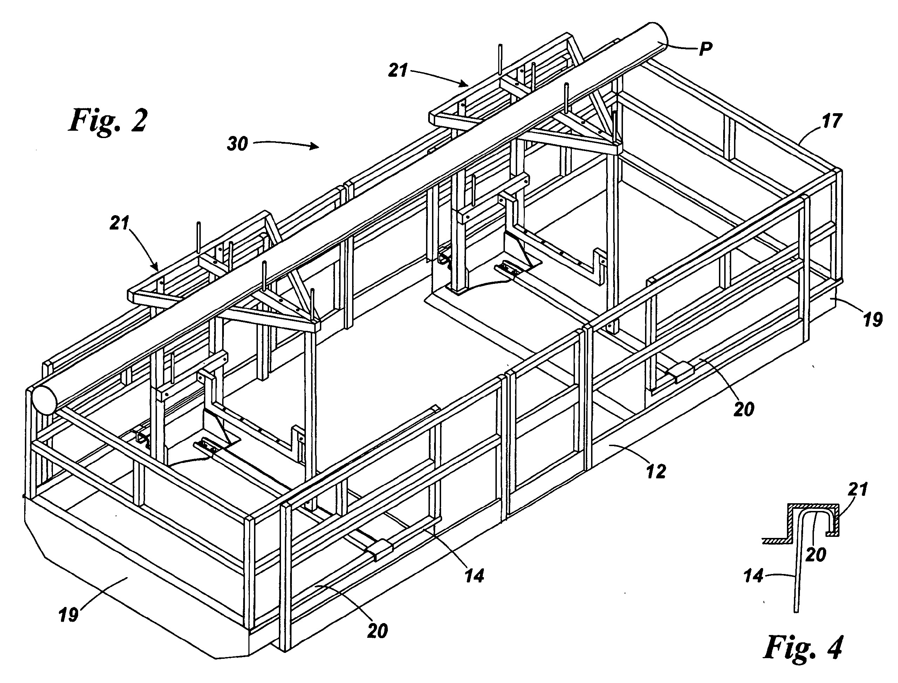

Fig. 1 shows an aerial lift 10 in the form of a self drive mobile scissor lift available from JLG Ind.. The lift 10 has a drivable vehicle body 11 having wheels 15 and a work platform 12 located on its body and which in use can be raised or lowered relative to the ground G. The platform 12 is shown in a lowered condition and the vehicle body is provided with stabilisers 16 at its corners which are lowered to provide stability during use of the lift. The work platform 12 is raised or lowered by a scissor type mechanism 13 typically operated by a powered hydraulic system provided on the lift. The platform 12 has extendable end portions 19 and the whole platform is provided with a safety barrier 17 including a kick plate 14 adjacent the platform 12. The kick plate 14 typically has an upper edge with an outwardly and downwardly turned lip 20 (see Fig.2). An access ladder 18 is provided on the body 11 for access to the platform 12 when in the lowered condition.

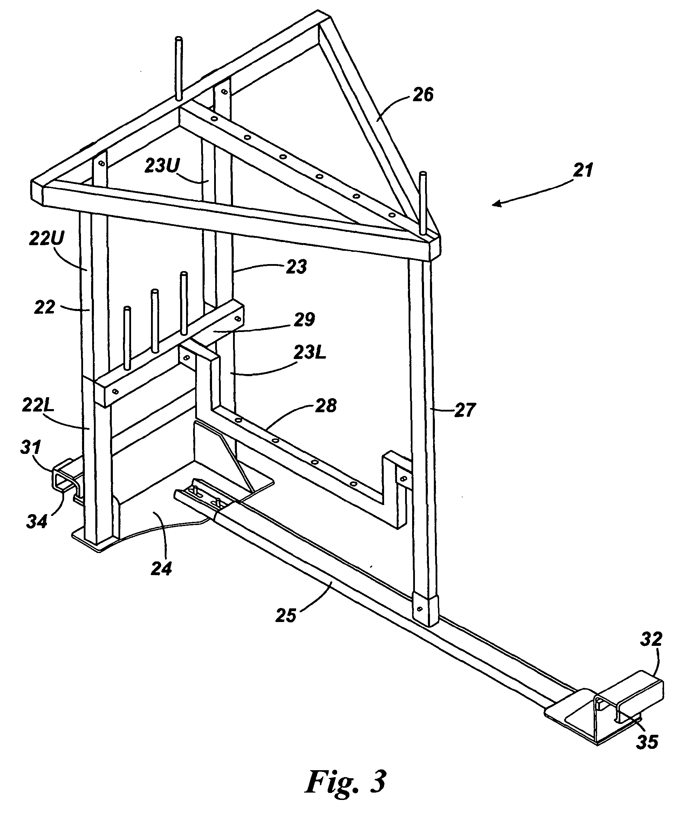

With reference now to Figures 2 and 3, there is shown a pair of material support assemblies 21 mounted on the work platform 12. The two assembles 21 are spaced apart and are located one on each end portion 19 of the platform 12 forming a storage rack 30 for the storage of at least one pipe length P.

Each assembly 21 comprises a pair of spaced apart substantially vertical legs 22,23 secured to a foot plate 24 which in use rests on the floor of the platform 12. A support arm 25 extends away from the foot plate inwardly of the safety barrier 17 and also rests against the platform floor. A third substantially vertical leg 27 is secured to the arm 25.

Each leg 22 or 23 of said pair of legs may be formed from upper limbs 22U, 23U and lower limbs 22L, 23L secured together , with the lower limbs 22L,23L being secured to the footplate 24. The upper end portions of each leg 22,23,27 are connected to a triangular material support 26 with its apex attached to the third leg 27. The support 26 in use provides a support surface for the pipe P. A lower support bracket 28 may also be provided between the third leg 27 and a strut 29 extending between the two legs 22,23 fixed to the foot plate 24. Lengths of pipe may be stored across the two support brackets 28. The assembly 21 is constructed from a kit of interconnected parts.

The support assemblies 21 are preferably arranged on the platform floor, adjacent the safety barrier 17 and kick plate 14. The lower portions 22L,23L of the two legs 22,23 are provided with coupling means 31 thereon for securing the assembly 21 to a first portion of the kick plate 14 on one side of the platform. The arm 25 has a further coupling means 32 at its distal end thereof for engaging a second portion of the kick plate 14 on the opposite side of the platform. The coupling means 31,32 are in the form of a catch which is engagable with the kick plate 14 to hold the respective foot plate 24 and arm 25 to the kick plate. The coupling means 31 on the two legs 22,23 may be formed integrally with each other as a single catch.

The catch 32 may be detachably and adjustably mounted to the distal end portion of the arm 25 and the arm in turn may be detachably and adjustably mounted to the foot plate 24.

The catches 31,32 each comprise an open hook portion 34,35 respectively which can engage over the outwardly extending lip 20 and turned down flange 21 on the kick plate 14 (see Fig.4)

The material storage assembly 21 is attached to the platform 12 by separately coupling the two legs 22,23 to the kick plate 14. The legs 22,23 with the footplate 24 are titled to cause the coupling means 31 to engage over the lip 20 and flange 21 with the hook 34 under the under the kick plate lip of a first portion of the kick plate. The legs 22,23 are then moved upright to rest the foot plate 24 on the platform floor. The coupling means 32 on said arm 25 is then similarly caused to engage with a second and opposite portion of the kick plate 14. The coupling means 32 is then secured to the arm 25 which in turn is secured to foot plate 24.

The material storage assembly 21 is secured in a stable manner on the platform by means of the two coupling means 31 32, engaging on opposite sides of the kick plate with the foot plate 24 and arm 25 resting firmly on the platform.

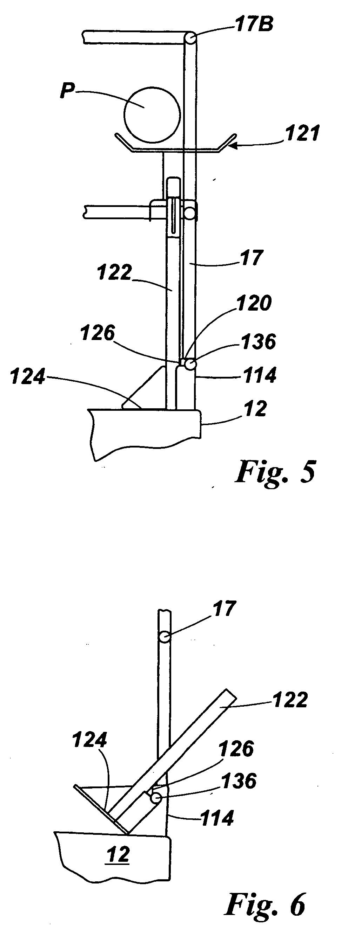

With reference to Figs.5 and 6, there is shown a second type of kick plate 114 having an upper edge with an inwardly extending lip 120 and downwardly turned flange 126. The storage assembly 121 may be substantially as described with reference to Fig.3 or may be of any other suitable assembly forming part of a storage rack, such as is disclosed in published EP Application 1873 115. For simplicity only one catch means 136 is shown, the catch means on the arm being substantially the same.

The assembly has at least one leg 122, and preferably two spaced apart legs as shown in Fig. 3, each of which has a footplate 124 at its lower end which in use rests on the platform 19, as previously described. The arm 25 (not shown) is attached to the footplate 24 as previously described and also rests against platform floor. The differences in relation to Fig.3 lies in the coupling means 136 which are used for attachment to the different kick plate 114. The legs 122 and the arm 25 are provided with a coupling means 136 in the form of a rod for engagement under lip 120. The lower portion of each leg 122 is provided on an outwardly facing surface (outward with respect to the platform) with the rod-like catch 136 adjacent its foot plate 124 being engagable within the downwardly turned flange 126 of the kick plate 114, to hold the respective footplate in proximity to the kick plate 114.

A similar catch is provided at the distal end of the arm 25 for engagement under the kick plate lip 126 on the opposite side of the platform 12.

The storage assembly may comprise a triangular platform 26 as previously described as previously described, or other suitable support.

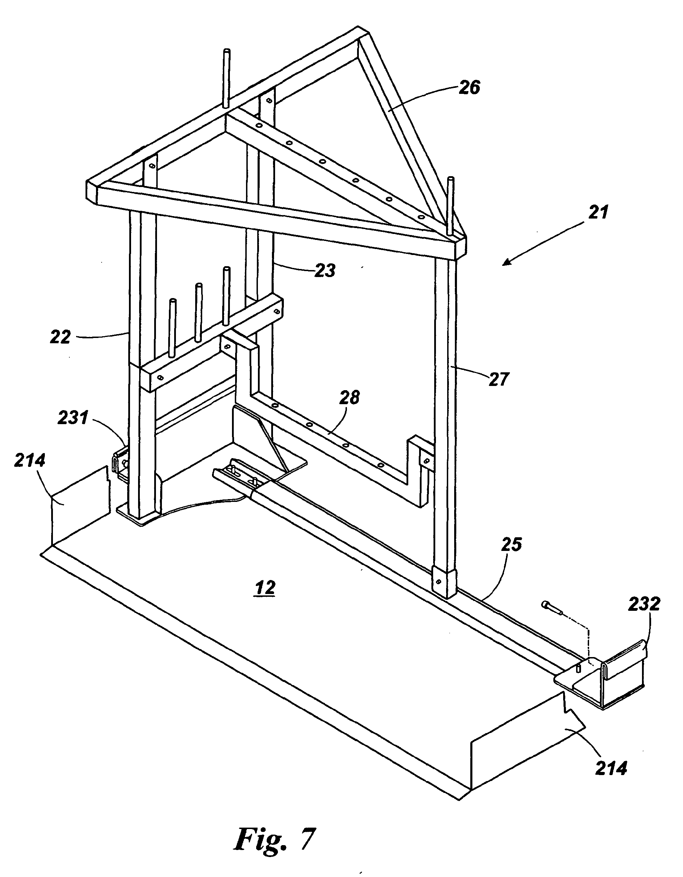

With reference now to Fig. 7 there is shown a platform 12 having a flat kick plate 214 without any lip on its upper edge. The storage assembly 21 is identical to that shown in Figs 2 & 3 except for the coupling means 231 and 232 for engaging the kick plate. The coupling means 231,232 are each in the form of an inverted U section hook which is immediately turned back on itself so that the hook closely embraces both sides of the flat kick plate 214.

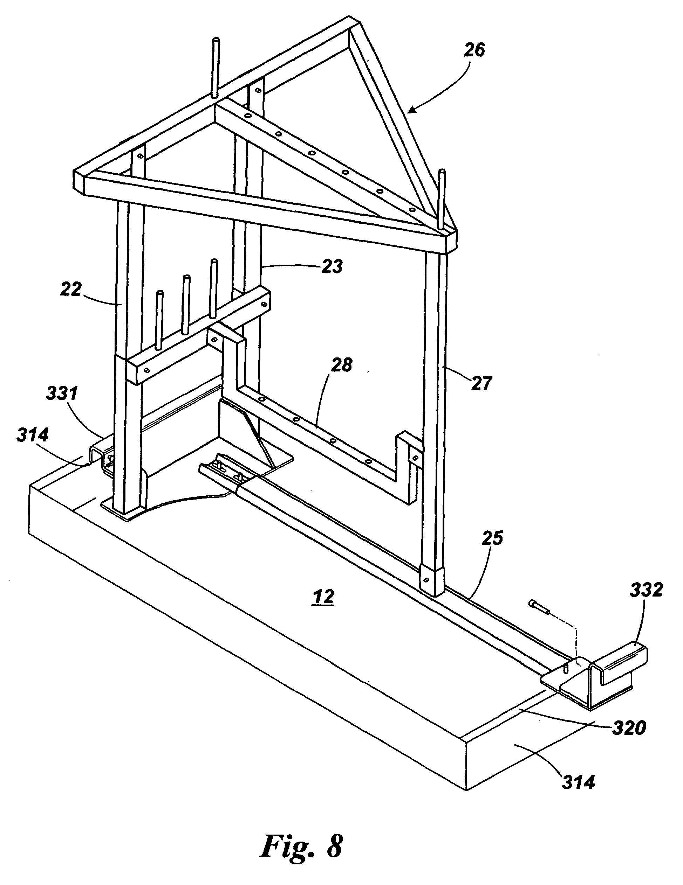

With reference now to Fig. 8, there is shown a platform 12 having a flat kick plate 314 with a lip 320 on its upper edge which is turned inwardly of the platform. The storage assembly 21 is identical to that shown in Figs 2 & 3 except for the coupling means 331 and 332 for engaging the kick plate 314. The coupling means 231,232 are each in the form of an inverted U section open hook which is turned back on itself so that the hook closely embraces both sides of the kick plate 314 and lip 320.

## Claims

1. An aerial lift having a work platform surrounded by a safety barrier including a kick plate adjacent the platform, with a material support rack located within the safety barrier and comprising two material support assemblies arranged side by side each support assembly (21) having at least one leg (22 OR 23) mounted on a foot (24) which in use rests on the platform (12), **characterised in that** the leg and foot have a first coupling means (31) for securing the assembly to a first portion of the kick plate (14) to one side of the platform, each foot (24) being also connected to a further coupling means (32) for engaging a respective second portion of the kick plate (14) on the opposite side of the platform.

2. An aerial lift as claimed in claim 1, wherein each further coupling means (32) is provided on an arm (25) which extends away from the foot (24) and in use also rests against the platform (12), the further coupling means (32) being located at the distal end of said arm (25).

3. An aerial lift as claimed in Claim 1 or Claim 2, wherein on each support assembly, at least one of said coupling means (31 or 32) is adjustably connected to the foot (24).

4. An aerial lift as claimed in Claim 2 or Claim 3, wherein each arm (25) is adjustably connected to the repective foot (24) and/or said further coupling means (32)is adjustably connected to the distal end of the arm (25).

5. An aerial lift as claimed in Claim 2 wherein each material support assembly (21) comprises a pair of spaced apart legs (22 & 23) each secured to a foot plate (24), and a third leg (27)secured to the arm (25).

6. An aerial lift as claimed in Claim 5, wherein for each assembly (21) the upper end portions of each leg (22,23,27) are connected to a triangular material support (26) with its apex attached to the third leg (27).

7. An aerial lift as claimed in Claim 5 or Claim 6, wherein for each assembly (21) each leg of said pair (22 & 23) is provided at its lower end portions with coupling means (31) in the form of a catch which is engagable with the kick plate (14) to hold the respective foot (24) adjacent the kick plate (14), and the arm (25) has a like catch (32) also for engaging opposing portions of the kick plate.

8. An aerial lift as claimed in Claim 7, wherein for each assembly (21) the coupling means (31) on each leg (22, 23) may be formed integrally with each other as a single catch.

9. An aerial lift as claimed in any one of Claims 1 to 8, wherein each coupling means (31,32) comprises a catch in the form of a hook engagable over the top edge of the kick plate (14).

10. An aerial lift as claimed in any one of Claims 1 to 9, having a kick plate (14) with an upper edge with either an inwardly turned lip (126) or outwardly turned lip (20) with respective coupling means on the storage assemblies engaging the lip of the kick plate.

11. An aerial lift as claimed in Claim 10, having a kick plate (14) with an upper edge having an outwardly turned lip with (20) a downwardly turned flange, and the respective coupling means on the storage assemblies hook over the lip (20) of the kick plate.

12. An aerial lift as claimed in Claim 10 having a kick plate (14) having an upper edge with an inwardly turned lip (120) and downwardly turned flange (126) with respective coupling means (136) on the storage assemblies engaging under the lip (126) of the kick plate.

13. A method of securing a material storage rack (30) within an aerial lift (10) having a work platform (12) surrounded by a safety barrier(17)with a kick plate (14) adjacent the platform (12), the material storage rack comprising two material support assemblies (21) wherein each assembly (21) has at least one leg (22 or 23) having a foot (24) and an arm (25) which in use rest on the platform (12), the leg and arm having a coupling means (31,32) thereon for securing the rack or assembly to said kick plate (14), wherein in said method the leg (22 or 23) and arm (25) are coupled to the kick plate (14) with the foot and arm then rested on the platform (12) in the following steps; the leg (22,23) and foot (25), separate from the arm, are caused to engage the respective coupling means (31) with a first portion of the kick plate (14) and the foot (24) then rested on the platform, the coupling means (32) on said arm (25) is caused to engage with a second portion of the kick plate (14) on the opposite side of the platform, the portion of said arm (25) including the coupling means (32)then being attached to foot.

## Patentansprüche

1. Hubarbeitsbühne, die über eine Arbeitsplattform verfügt, welche umgeben ist von einer Sicherheitsbarriere mit einer an die Plattform angrenzenden Trittplatte, wobei sich ein Materialträgergestell innerhalb der Sicherheitsbarriere befindet und zwei nebeneinander angeordnete Materialträgerbaugruppen umfasst, wobei jede Trägerbaugruppe (21) mindestens ein Bein (22 ODER 23) aufweist, das an einem Fuß (24) befestigt ist, welcher im Gebrauch auf der Plattform (12) aufsitzt, **dadurch gekennzeichnet, dass** das Bein und der Fuß über eine erste Kopplungsvorrichtung (31) zum gesicherten Befestigen der Baugruppe an einem ersten Abschnitt der Trittplatte (14) an einer Seite der Plattform verfügen, wobei jeder Fuß (24) auch mit einer weiteren Kopplungsvorrichtung (32) zum Eingreifen in einen jeweiligen zweiten Abschnitt der Trittplatte (14) auf der gegenüberliegenden Seite der Plattform verbunden ist.

2. Hubarbeitsbühne gemäß Anspruch 1, wobei jede weitere Kopplungsvorrichtung (32) an einem Arm (25) vorgesehen ist, der sich von dem Fuß (24) weg erstreckt und im Gebrauch ebenfalls auf der Plattform (12) aufsitzt, wobei sich die weitere Kopplungsvorrichtung am distalen Ende des Arms (25) befindet.

3. Hubarbeitsbühne gemäß Anspruch 1 oder Anspruch 2, wobei an jeder Trägerbaugruppe mindestens eine der Kopplungsvorrichtungen (31 oder 32) verstellbar mit dem Fuß (24) verbunden ist.

4. Hubarbeitsbühne gemäß Anspruch 2 oder Anspruch 3, wobei jeder Arm (25) verstellbar mit dem jeweiligen Fuß (24) verbunden ist und/oder die weitere Kopplungsvorrichtung (32) verstellbar mit dem distalen Ende des Arms (25) verbunden ist.

5. Hubarbeitsbühne gemäß Anspruch 2, wobei jede Materialträgerbaugruppe (21) ein Paar zueinander beabstandete Beine (22 und 23) umfasst, die jeweils an einer Fußplatte (24) befestigt sind, sowie ein drittes Bein (27), das gesichert an dem Arm (25) befestigt ist.

6. Hubarbeitsbühne gemäß Anspruch 5, wobei bei jeder Baugruppe (21) die oberen Endabschnitte jedes Beins (22, 23, 27) mit einem dreieckigen Materialträger (26) verbunden sind, dessen Scheitelpunkt an dem dritten Bein (27) befestigt ist.

7. Hubarbeitsbühne gemäß Anspruch 5 oder Anspruch 6, wobei bei jeder Baugruppe (21) jedes Bein des Paares (22 und 23) an seinen unteren Endabschnitten mit einer Kopplungsvorrichtung (31) in Form einer Raste versehen ist, die in die Trittplatte (14) einrasten kann, um den jeweiligen Fuß (24) angrenzend an die Trittplatte (14) zu halten, und der Arm (25) eine gleiche Raste (32) aufweist, die ebenfalls dem Einrasten in gegenüberliegende Abschnitte der Trittplatte dient.

8. Hubarbeitsbühne gemäß Anspruch 7, wobei bei jeder Baugruppe (21) die Kopplungsvorrichtung (31) an jedem Bein (22, 23) als ein einzelne Raste integral miteinander ausgebildet sein kann.

9. Hubarbeitsbühne gemäß einem der Ansprüche 1 bis 8, wobei jede Kopplungsvorrichtung (31, 32) eine Raste in Form eines Hakens umfasst, der über die Oberkante der Trittplatte (14) einrasten kann.

10. Hubarbeitsbühne gemäß einem der Ansprüche 1 bis 9, die über eine Trittplatte (14) mit einer Oberkante verfügt, die entweder eine nach innen gebogene Lippe (126) oder eine nach außen gebogene Lippe (20) aufweist, wobei jeweilige Kopplungsvorrichtungen an den Aufbewahrungsbaugruppen in die Lippe der Trittplatte eingreifen.

11. Hubarbeitsbühne gemäß Anspruch 10, die über eine Trittplatte (14) mit einer Oberkante verfügt, die eine nach außen gebogene Lippe (20) mit einem nach unten gebogenen Flansch aufweist und die jeweilige Kopplungsvorrichtungen an den Aufbewahrungsbaugruppen über der Lippe (20) der Trittplatte einhaken.

12. Hubarbeitsbühne gemäß Anspruch 10, die über eine Trittplatte (14) mit einer Oberkante verfügt, die eine nach innen gebogene Lippe (120) und einen nach unten gebogenen Flansch (126) aufweist und die jeweilige Kopplungsvorrichtungen (136) an den Aufbewahrungsbaugruppen unter der Lippe (126) der Trittplatte eingreifen.

13. Verfahren zur gesicherten Befestigung eines Materialaufbewahrungsgestells (30) innerhalb einer Hubarbeitsbühne (10), die über eine Arbeitsplattform (12) verfügt, welche umgeben ist von einer Sicherheitsbarriere (17) mit einer an die Plattform (12) angrenzenden Trittplatte (14), wobei das Materialaufbewahrungsgestell zwei Materialträgerbaugruppen (21) umfasst, wobei jede Baugruppe (21) über mindestens ein Bein (21 oder 23) mit einem Fuß (24) und einem Arm (25) verfügt, der im Gebrauch auf der Plattform (12) aufsitzt, wobei sich an dem Bein und dem Arm eine Kopplungsvorrichtung (31, 32) befindet, die der gesicherten Befestigung des Gestells oder der Baugruppe an der Trittplatte (14) dient, wobei bei dem Verfahren das Bein (22 oder 23) und der Arm (25) mithilfe der folgenden Schritte an der Trittplatte (14) gekoppelt werden, sodass danach der Fuß und der Arm auf der Plattform (12) aufsitzen: das Bein (22 oder 23) und der Fuß (24), getrennt von dem Arm, werden dazu gebracht, dass die jeweiligen Kopplungsvorrichtungen (31) in einem ersten Abschnitt der Trittplatte (14) eingreifen, sodass der Fuß (24) dann auf der Plattform aufsitzt, die Kopplungsvorrichtung (32) an dem Arm (25) wird dazu gebracht, in einen zweiten Abschnitt der Trittplatte (14) der gegenüberliegenden Seite der Plattform einzugreifen, wobei der Abschnitt des Arms (25), welcher die Kopplungsvorrichtung (32) enthält, dann mit dem Fuß verbunden ist.

## Revendications

1. Une nacelle élévatrice ayant une plate-forme de travail entourée d'une barrière de sécurité incluant un garde-pieds adjacent à la plate-forme, un râtelier de support de matériel étant situé à l'intérieur de la barrière de sécurité et comprenant deux assemblages de support de matériel agencés côte à côte, chaque assemblage de support (21) ayant au moins une patte (22 OU 23) montée sur un pied (24) qui lors de l'utilisation repose sur la plate-forme (12), **caractérisée en ce que** la patte et le pied ont un premier moyen de couplage destiné à assujettir l'assemblage à une première portion du garde-pieds (14) sur un côté de la plate-forme, chaque pied (24) étant également raccordé à un moyen de couplage supplémentaire (32) pour se mettre en prise avec une deuxième portion respective du garde-pieds (14) sur le côté opposé de la plate-forme.

2. Une nacelle élévatrice telle que revendiquée dans la revendication 1, dans laquelle chaque moyen de couplage supplémentaire (32) est prévu sur un bras (25) qui s'étend en s'éloignant du pied (24) et lors de l'utilisation repose également contre la plate-forme (12), le moyen de couplage supplémentaire (32) étant situé au niveau de l'extrémité distale dudit bras (25).

3. Une nacelle élévatrice telle que revendiquée dans la revendication 1 ou la revendication 2, dans laquelle sur chaque assemblage de support au moins un desdits moyens de couplage (31 ou 32) est raccordé au pied (24) de façon réglable.

4. Une nacelle élévatrice telle que revendiquée dans la revendication 2 ou la revendication 3, dans laquelle chaque bras (25) est raccordé de façon réglable au pied respectif (24) et/ou ledit moyen de couplage supplémentaire (32) est raccordé de façon réglable à l'extrémité distale du bras (25).

5. Une nacelle élévatrice telle que revendiquée dans la revendication 2 dans laquelle chaque assemblage de support de matériel (21) comprend une paire de pattes espacées (22 & 23) chacune assujettie à une plaque de pied (24), et une troisième patte (27) assujettie au bras (25).

6. Une nacelle élévatrice telle que revendiquée dans la revendication 5, dans laquelle pour chaque assemblage (21) les portions d'extrémité supérieure de chaque patte (22, 23, 27) sont raccordées à un support de matériel triangulaire (26) dont le sommet est assujetti à la troisième patte (27).

7. Une nacelle élévatrice telle que revendiquée dans la revendication 5 ou la revendication 6, dans laquelle pour chaque assemblage (21) chaque patte de ladite paire (22 & 23) est munie au niveau de ses portions d'extrémité inférieure d'un moyen de couplage (31) sous la forme d'un cran qui peut se mettre en prise avec le garde-pieds (14) pour maintenir le pied (24) respectif adjacent au garde-pieds (14), et le bras (25) a un cran (32) analogue également pour se mettre en prise avec les portions opposées du garde-pieds.

8. Une nacelle élévatrice telle que revendiquée dans la revendication 7, dans laquelle pour chaque assemblage (21) les moyens de couplage (31) sur chaque patte (22, 23) peuvent être formés intégralement l'un avec l'autre comme un cran unique.

9. Une nacelle élévatrice telle que revendiquée dans n'importe laquelle des revendications 1 à 8, dans laquelle chaque moyen de couplage (31, 32) comprend un cran sous la forme d'un crochet qui peut se mettre en prise par dessus le bord de dessus du garde-pieds (14).

10. Une nacelle élévatrice telle que revendiquée dans n'importe laquelle des revendications 1 à 9, ayant un garde-pieds (14) avec un bord supérieur avec soit une lèvre tournée vers l'intérieur (126), soit une lèvre tournée vers l'extérieur (20), les moyens de couplage respectifs sur les assemblages de stockage se mettant en prise avec la lèvre du garde-pieds.

11. Une nacelle élévatrice telle que revendiquée dans la revendication 10, ayant un garde-pieds (14) avec un bord supérieur ayant une lèvre tournée vers l'extérieur (20) avec une bride tournée vers le bas, et les moyens de couplage respectifs sur les assemblages de stockage s'accrochent par dessus la lèvre (20) du garde-pieds.

12. Une nacelle élévatrice telle que revendiquée dans la revendication 10 ayant un garde-pieds (14) avec un bord supérieur ayant une lèvre tournée vers l'intérieur (120) avec une bride tournée vers le bas (126) avec des moyens de couplage respectifs (136) sur les assemblages de stockage se mettant en prise sous la lèvre (126) du garde-pieds.

13. Un procédé pour assujettir un râtelier de stockage de matériel (30) à l'intérieur d'une nacelle élévatrice (10) ayant une plate-forme de travail (12) entourée d'une barrière de sécurité (17) avec un garde-pieds (14) adjacent à la plate-forme (12), le râtelier de stockage de matériel comprenant deux assemblages de support de matériel (21) dans lequel chaque assemblage (21) a au moins une patte (22 ou 23) ayant un pied (24) et un bras (25) qui lors de l'utilisation reposent sur la plate-forme (12), la patte et le bras ayant un moyen de couplage (31, 32) sur eux pour assujettir le râtelier ou l'assemblage audit garde-pieds (14), dans lequel dans ledit procédé la patte (22 ou 23) et le bras (25) sont couplés au garde-pieds (14), le pied et le bras reposant ensuite sur la plate-forme (12) dans les étapes suivantes ; la patte (22, 23) et le pied (25), distincts du bras, sont amenés à se mettre en prise avec les moyen de couplage respectifs (31) avec une première portion du garde-pieds (14) et le pied (24) ensuite reposé sur la plate-forme, le moyen de couplage (32) sur ledit bras (25) est amené à se mettre en prise avec une deuxième portion du garde-pieds (14) sur le côté opposé de la plate-forme, la portion dudit (25) incluant le fait pour le moyen de couplage (32) d'être ensuite assujetti au pied.
